# EUROPEAN PATENT SPECIFICATION

(11) **EP 3 423 715 B1**
(45) Date of publication and mention of the grant of the patent: **16.02.2022**
(21) Application number: 17709765.6
(22) Date of filing: 02.03.2017
(51) Int. Cl.: F03G 7/06

(54) **SMA WIRE HANDLING WITH AIR SUCTION**
SMA-DRAHT-HANDHABUNG MIT LUFTANSAUGUNG
MANIPULATION DE FIL SMA AVEC ASPIRATION D'AIR

(30) Priority: 02.03.2016 GB 201603619
(43) Date of publication of application: 09.01.2019
(73) Proprietor: Cambridge Mechatronics Limited, Cambridge CB4 1YG (GB)
(72) Inventor: BUNTING, Stephen Matthew, Cambridge Cambridgeshire CB4 1YG (GB)
(74) Representative: Cambridge Mechatronics Limited
(86) International application number: PCT/GB2017/050564
(87) International publication number: WO 2017/149312

(56) References cited:
- WO-A1-00/38268
- WO-A1-2007/121254
- WO-A1-2015/042398
- WO-A1-2016/018477
- GB-A- 2 431 720

## Description

This invention relates to a suction device and a Shape Memory Alloy (SMA) actuator assembly process. More particularly, the present invention offers an improved method of wire handling to prevent damage during construction. The actuator may be used for example for autofocus or shake correction in a miniature camera for portable devices such as mobile phones.

SMA actuators are known for use in handheld electronic devices, such as cameras and mobile phones. Such actuators are used for example in miniature cameras to effect focus, zoom or Optical Image Stabilization (OIS). The co-owned international patent application PCT/GB2007/001050 describes an actuator for autofocus using a single SMA wire and the co-owned international patent application PCT/GB2013/051325 describes a compact SMA wire actuator for OIS using four SMA wires. A further co-owned international patent application PCT/GB2011/000272 describes an SMA actuator comprising eight SMA wires capable of effecting both autofocus and OIS. In all of the described actuators, each wire is fixed at each end to either a stationary or a moving part. The preferred method of fixing is crimping.

WO 00/38268 discloses a load responsive air door for a metal-air cell. In use, a SMA wire is connected in a circuit to a negative terminal or to a zinc paste anode material on one end and to an air shutter on the other. WO 2007/121254 A1 discloses a fluid manager using a lever. SMA wires are mounted to extend substantially parallel to one another.

Positioning SMA wire during crimp forming is key to successfully automating actuator crimping in mass production. The SMA wire in an actuator for miniature cameras is typically thin, generally less than 50 microns diameter and preferably of the order of 25 microns diameter. The wire is therefore difficult to handle and is fragile. In addition, the SMA wire may be coated, for example with an insulating layer to prevent electrical shorting in operation. Such a coating may also be fragile and prone to damage during mechanical handling. Manipulating the SMA wire to position it accurately for crimping is therefore a delicate task.

Existing approaches include mechanical grippers which hold the wire while the crimps are made. Given the likelihood of damage by grippers, it is necessary to position the grippers on a redundant piece of wire which can be cut off and discarded after crimping. Typically a wire is held taut between two grippers and presented to two open crimps positioned to the inner side of the grippers. After the crimps are closed to hold the wire, the grippers can be opened and the wire outside the crimps cut off and discarded. Disadvantages of this approach are that it is wasteful of wire, as the wire outside the crimps is discarded. For example, 1 mm of waste wire at each crimp of 4 million 4-wire actuators a month results in wastage of 32km of wire. Also in the case where the SMA wires are crimped on to a pre-formed assembly, such as an OIS actuator assembly, the size of the grippers may make it difficult to position the wire accurately on the crimps, unless sufficient space is allowed in the design. This is a particular problem where there are several SMA wires on one assembly, as for example one wire on each of four sides of an OIS actuator, as space at the corners where the crimps are located is at a premium. In such a case, the bulk of the grippers means that it is unlikely to be possible to crimp more than one or possibly two wires at a time. For a typical 4-wire actuator, gripping outside the crimps allows only 2 of the 4 wires to be crimped at the same time, as the respective grippers would otherwise interfere with each other.

The invention is defined in the claims.

To allow better understanding, and embodiment of the present invention will now be described by way of non-limitative example with reference to the accompanying drawings, in which:
Figure 1 is a schematic view of a suction device in a first configuration;
Figure 2 is a schematic view of a piece of SMA wire being presented to an edge of the suction device of Figure 1;
Figure 3 is a schematic view of a piece of SMA wire held along the edge of the suction device of Figure 1 by gas pressure;
Figure 4 is a schematic view of the piece of SMA wire moved to an actuator assembly;
Figure 5 is a schematic view of a suction device in a second configuration;
Figure 6 is a schematic view of a suction device in a third configuration;
Figure 7 is a schematic view showing the underside of the suction device of Figure 6; and
Figure 8 is a schematic view of a suction device in a fourth configuration.

There will now be described a suction device in four configurations. The suction device is the same in each configuration, except for the differences set out below. Accordingly, common elements are given common reference numerals. Except for the differences explicitly set out, the description of common elements applies equally to each of the configurations of the suction device, but for brevity will not be repeated.

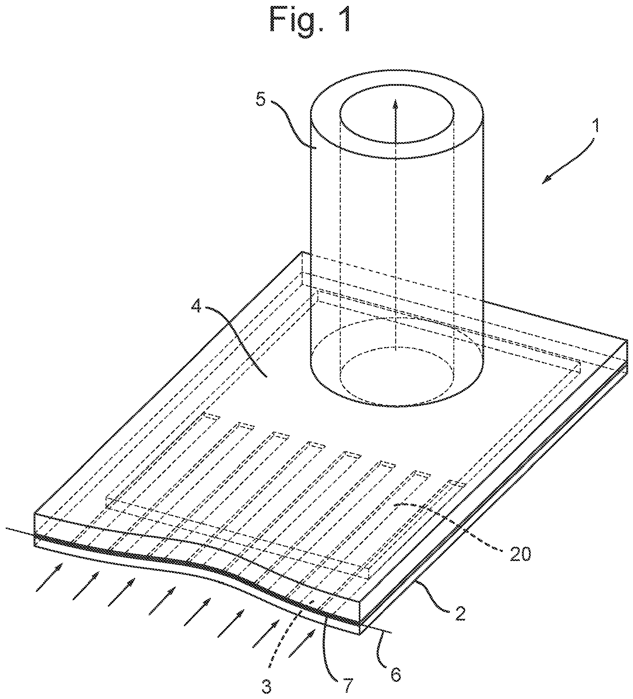

Figure 1 schematically shows the suction device 1 in the first configuration. The suction device is arranged as follows.

The suction device 1 comprises an edge 7. The suction device 1 is configured to hold a piece of SMA wire 6 along the edge 7 of the suction device 1. The piece of SMA wire 6 is held by gas pressure. The gas pressure is generated by suction.

As shown in Figure 1, the piece of SMA wire 6 is held by gas pressure such that no mechanical grippers are needed. The suction device 1 can be used to manipulate the SMA wire 6 using gas (e.g. air) suction. Gas suction is less likely than mechanical grippers to damage the SMA wire 6. When the SMA wire 6 comprises a coating, gas suction is less likely than mechanical grippers to damage the coating of the SMA wire 6. Of course, it remains theoretically possible that a coating of the SMA wire 6 might be damaged by the edge 7 of the suction device 1 whilst held by gas pressure. However, if there would be any damage, it would be less than if mechanical grippers were used instead of gas pressure to manipulate the SMA wire 6.

Additionally, mechanical grippers would require an extra bit of length on the ends of the SMA wire 6 to be held by the mechanical grippers. These extra bits of wire would then need to be discarded when no longer necessary. Accordingly, by manipulating the SMA wire 6 using gas pressure instead of mechanical grippers, wastage of the SMA wire 6 is reduced.

As shown in Figure 1, the suction device 1 may comprise a plurality of channels 20. The channels 20 extend from the edge 7 of the suction device 1 towards a suction outlet of the suction device 1. The suction outlet 1 is connectable to a source of underpressure, e.g. a suction pump or sucker 5.

Hence, in the configurations shown in the Figures, the channels 20 allow the reduced gas pressure caused by suction to act on the piece of SMA wire 6. The channels 20 connect the edge 7 of the suction device 1 to the underpressure, e.g. provided by the sucker 5.

As shown in Figure 1, each channel 20 coincides with the edge 7 of the suction device 1 at an opening. There may be one opening for each channel 20. An opening is provided at the edge 7 of the suction device 1 at each point where a channel 20 coincides with the edge 7 of the suction device 1. By providing a plurality of channels 20, the piece of SMA wire 6 is held at several points along the edge 7 of the suction device 1. This helps to maintain the desired shape and length of the piece of SMA wire 6 held at the edge 7 of the suction device 1.

The number of channels 20 is not particularly limited. The number of channels 20 may be at least two, so as to provide two points (spaced apart from each other) at which the piece of SMA wire 6 is held to the edge 7 of the suction device 1. There may be at least one channel 20 on either side of the central portion of the edge 7. Preferably there are more than two channels 20 so as to make the level of gas pressure on the SMA wire 6 more even across the edge 7. The total number of channels 20 may be at least five, and optionally at least ten. The channels 20 may be distributed along the edge 7 such that the maximum distance between the openings (in the edge 7) is at least 5 mm and optionally at most 10 mm.

As shown in Figure 1, the channels 20 may be substantially parallel to each other. By providing that the channels 20 are substantially parallel, turbulence of gas within the channels 20 and between the channels 20 is reduced. This increases the stability with which the piece of SMA wire 6 is held at the edge 7 of the suction device 1. However, it is not necessary for the channels 20 to be parallel to each other. For example, the channels 20 may be closer to each other near the suction opening and spread apart at the edge 7.

As shown in Figure 1, each channel 20 is longitudinal and has a longitudinal direction. Each channel 20 may be substantially straight. When the channels 20 are substantially straight, turbulence is reduced, thereby improving the stability of holding the piece of SMA wire 6. However, it is not necessary for the channels 20 to be straight. For example the channels 20 may be curved such that the ends of the channels close to the suctions opening are bunched together and the channels 20 at the peripheral portions of the suction device 1 bow outwards in a curved manner.

As shown in Figure 1, the plurality of channels 20 coincide with the edge 7 of the suction device 1 at points (openings) that form a straight line when viewed in a longitudinal direction of the channels 20 (i.e. when looking through the channels). In Figure 1, the shape of the SMA wire 6 forms a curve when viewed in plan view (i.e. when looking downwards from the top of the suction device 1 as shown in Figure 1). However, when the suction device 1 is viewed in a direction looking along the longitudinal direction of the channels 20, the piece of SMA wire 6 is straight. This is because the channels 20 coincide with the edge 7 at points that form a straight line when viewed in a longitudinal direction of the channels 20. In other words, the piece of SMA wire 6 is parallel to the base 2 of the suction device 1.

This arrangement makes it easier to carefully control the desired length of the piece of SMA wire 6 that is to form part of the actuator assembly 13. This arrangement makes it easier to manipulate the SMA wire 6 and present it in the desired orientation to an actuator assembly 13 to be crimped.

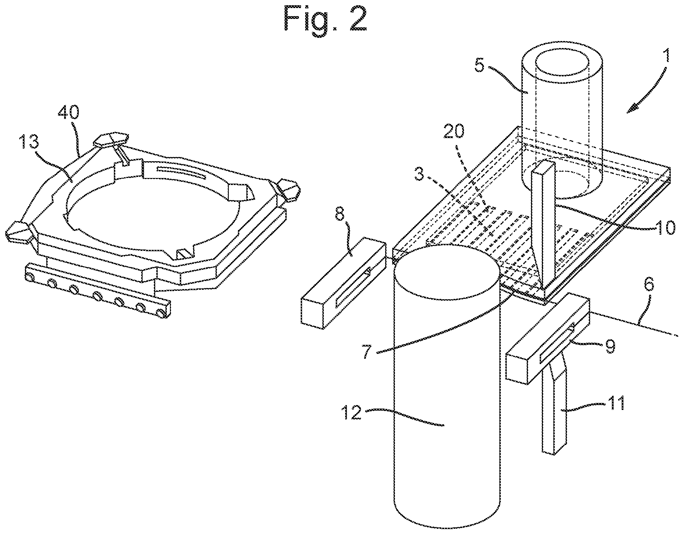

Figure 1 shows a slight curve in the piece of SMA wire 6, which is intentional to ensure that the piece of SMA wire 6 has the desired length. However, it is not necessary for such a curve to be present. Alternatively, the SMA wire 6 may be held as a straight line. This is particularly the case when the SMA wire 6 is later attached to the actuator assembly 13 (see Figures 2 to 4) at the same temperature as the actuator assembly 13 reaches in use.

When the actuator assembly 13 is used, the pieces of SMA wire 6 of the actuator assembly 13 heat up. When a piece of SMA wire 6 heats up, it contracts. It is possible for the SMA wire 6 to be attached to the actuator assembly 13 in a cold state (i.e. at a temperature colder than the temperature that the SMA wire 6 reaches in use of the actuator assembly 13). In this scenario, the length of SMA wire 6 that is provided to the actuator assembly 13 for crimping must be longer than the intended length of SMA wire 6 when the actuator assembly 13 is used.

As shown in Figure 1, the suction device 1 may comprise a void 4. The void 4 is in fluid communication with the channels 20 and the suction outlet. The void 4 may be a chamber defined by a frame as shown in Figure 1. As shown in Figure 1, the frame may define the four sides of the void 4 and the top of the void 4. In the configuration shown in Figure 1, the void 4 may have the shape of a rectangular prism.

The first configuration of an embodiment of the invention is shown in Figure 1. In this configuration the suction device 1 comprises a base 2 with a comb 3 and void 4 attached to a sucker 5 which draws air from the comb 3 through the void 4. The comb 3 may be formed as a separate component from the base 2 and the frame that defines the void 4. The base 2 may comprise a sheet of metal. The comb 3 may comprise an etched sheet of metal. The comb may be replaceable. For example, the comb 3 may come in different shaped having different curve profiles. The comb 3 can be swapped to adjust wire length. This swapping process may be relatively time consuming, but is reliably repeatable.

The bottom of the void 4 may be defined by the comb 3 and the base 2. The SMA wire 6 offered up to the edge 7 of the comb 3 is held in place by air pressure caused by the suction. The profile of the comb 3 can be changed to adjust the wire length. The sucker 5 may be a standard vacuum or air suction pump.

An example of the use of the suction device 1 during actuator manufacture is illustrated in Figures 2 to 4.

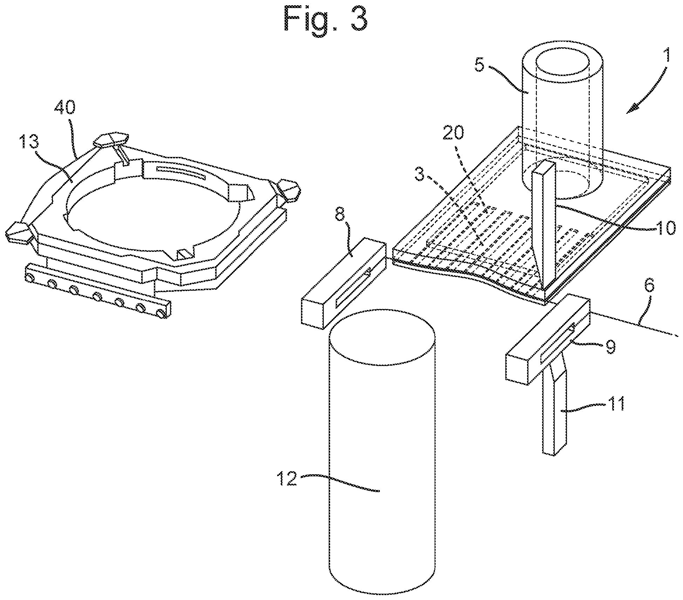

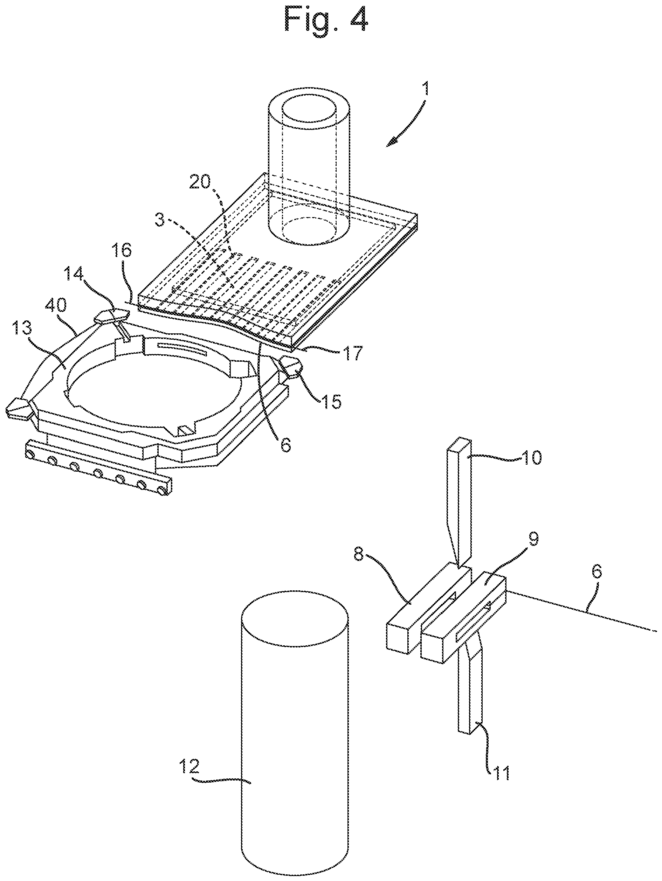

Figures 2 and 3 show the suction device 1 of the invention, first and second grippers 8 and 9, cutters 10 and 11 and optional mechanical deflector 12 which together serve to accurately position the SMA wire 6 on the comb 3. In a subsequent step, shown in Figure 4, the SMA wire 6 on the suction device 1 is offered up to the actuator assembly 13, (e.g. a camera actuator assembly) lining up the SMA wire 6 previously in first and second grippers 8 and 9 with the crimps 14 and 15 on the actuator assembly 13, ready for crimping.

At the beginning of the process, shown in Figure 2, the first gripper 8 is closed and the second gripper 9 is open. The process may comprise pulling SMA wire 6 from, e.g., a spool (not shown) as the first gripper 8 moves across (from right to left in the drawing). Once positioned by the suction device 1, the SMA wire 6 may be gently pressed to the comb 3 with a mechanical deflector 12. The mechanical deflector 12 and the profile of the edge 7 of the comb 3 are designed to define the desired length of the SMA wire 6 between crimps once manufactured. Suction is then applied by the sucker 5 to hold the wire 6 to the comb edge 7 by air pressure.

The second gripper 9 is then closed and the cutters 10 and 11 move to cut the SMA wire 6, as depicted in Figure 3.

The first gripper 8 opens to release the piece of SMA wire 6. The suction device 1 with the attached piece of SMA wire 6 is then moved across to the actuator assembly 13, as shown in Figure 4. The free ends 16 and 17 of the length of SMA wire 6 are lined up with the open crimps 14 and 15 of the actuator assembly 13. The free ends 16 and 17 are unconstrained tails of the SMA wire 6 that need to be positioned in the open crimps 14 and 15. It is desirable for the free ends 16 and 17 to be short so as to make it easier to position them accurately relative to the crimps 14 and 15.

A crimping tool (not shown) is then used to close the crimps 14 and 15 over the SMA wire 6, providing accurate positioning of the SMA wire 6 in the actuator assembly 13. Suction is then stopped to release the SMA wire 6 from the suction device 1.

The first gripper 8 then moves across (left to right in Figure 4) to pick up the end of the SMA wire 6, before moving back (right to left) to the starting position of Figure 2. The suction device 1 also returns to the starting position and the process is repeated.

Figure 4 shows attachment of the SMA wire 6 on one side of the actuator assembly 13. Item 40 in Figures 2 to 4 is an SMA wire that has already been attached. It can be readily understood that the attachment devices and processes can be duplicated on the other three sides of the actuator assembly 13 to allow simultaneous wire attachment on all four sides of the actuator assembly 13. Since the bulky first and second grippers 8,9 are entirely separate from the actuator assembly 13, there is space to crimp all four pieces of SMA wire 6 at the same time.

The first and second grippers 8, 9 can be positioned between the crimps 14, 15 in the active region of the SMA wire 6. It is possible that the first and second grippers 8, 9 could damage the SMA wire 6 during handling, cutting and the crimp forming processes. However, by not requiring that grippers are used to manipulate the SMA wire 6 and bring it to the correct position in the actuator assembly 13, any damage is less than would be the case otherwise.

As shown in Figure 1, the channels 20 may be formed in a plane. As exemplified in Figure 1, it may be that the suction outlet does not overlap with the channels 20 when viewed in a direction perpendicular to the plane comprising the channels 20. As shown in Figure 1, the suction outlet (connected to the sucker 5) may be spaced from the ends of the channels 20 that are furthest from the edge 7 of the suction device 1. In other words, when looking down on the suction device 1 from above, there is a gap between the suction outlet and the ends of the channels 20 that are closest to the suction outlet.

This arrangement helps to provide a more consistent gas pressure across the different channels 20. Alternatively, if the suction outlets overlaps the channels 20, then the channels 20 that overlap with the suction outlet may experience a different gas flow compared to the channels 20 that do not overlap with the suction outlet.

In the configurations shown in the Figures, the suction device 1 comprises a base 2 and a comb 3. The base 2 and the comb 3 together define the channels 20. In particular, the channels 20 are defined as the spaces between the teeth of the comb 3. The edge 7 of the suction device 1 is an edge of the comb 3. In particular, the edge 7 of the suction device 1 comprises the end tips of the teeth of the comb 3. The base 2, which is depicted as being below the comb 3 in Figure 1, for example, defines the bottom of the channels 20. The top of the channels 20 opens out into the void 4. However, the parts of the channels 20 that are closest to the edge 7 of the suction device 1 are bounded at their top side by the frame that defines the sides of the void 4.

However, it is not necessary for the channels 20 to be defined by a comb and a base. For example, alternatively the channels 20 may be defined within an integral housing. The integral housing may have the same shape as the combination of the base 2, the comb 3 and the frame that defines the void 4 shown in Figure 1, for example. The integral housing may be formed as a plastic moulding.

As shown in each of the configurations shown in the Figures, the edge 7 of the suction device 1 may be profiled. This means that the edge 7 of the suction device 1 does not form a straight line. As shown in the first configuration in Figure 1, the plurality of channels 20 may coincide with the edge 7 of the suction device 1 at points (openings) that form a curved line when viewed in a direction perpendicular to the channels 20. As explained above, the curve helps to control the length of SMA wire 6 that is held at the edge 7 of the suction device 1.

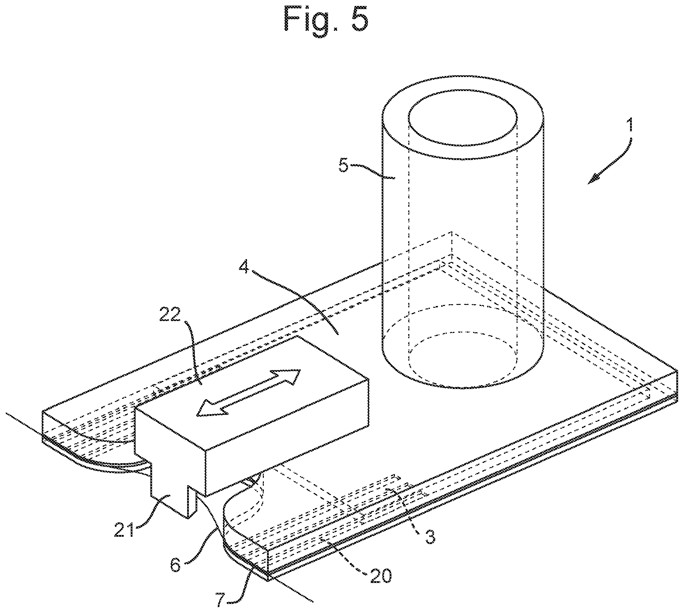

In particular, as shown in the Figures, the edge 7 of the suction device 1 may comprise peripheral sections at which the channels 20 coincide with the edge 7 of the suction device 1 and a central section at which the edge 7 of the suction device 1 is set back relative to the peripheral sections. For example, in the first configuration shown in Figure 1, the central section of the edge 7 is slightly set back relative to the peripheral sections of the edge 7. The central section of the edge 7 is concave with respect to the peripheral sections of the edge 7. This is also shown in the second, third and fourth configurations shown in Figures 5 to 8.

In the second and third configurations shown in Figures 5 to 7, none of the channels 20 coincides with the edge 7 of the suction device 1 in the central section of the edge 7. For example, in the second configuration shown in Figure 5, channels 20 are present in the peripheral sections of the edge 7 of the suction device 1. For example, three channels 20 may be provided in each of the two peripheral sections of the edge 7. However, no channels 20 are provided in the central section of the suction device 1.

Hence, in use when a piece of SMA wire 6 is held along the edge 7 of the suction device 1 by gas pressure, a central portion of the piece of SMA wire 6 does not contact the central section of the edge 7 of the suction device 1. This is shown in Figure 5, for example. The SMA wire 6 is in contact with the edge 7 of the suction device 1 at the peripheral sections of the edge 7. However, between the peripheral sections (i.e. at a position corresponding to the central section of the edge 7), the piece of SMA wire 6 is suspended away from the central section of the edge 7.

This arrangement allows the length of SMA wire 6 to be varied. This is particularly desirable because the amount of SMA wire 6 between the crimps 14 and 15 of the actuator assembly 13 may need to be easily adjustable. In particular, as shown in Figure 5, in the second configuration, the suction device 1 may comprise a pin 21. The pin 21 is configured to deflect the central portion of the piece of SMA wire 6 towards the edge 7 of the suction device 1. In particular, the pin 21 deflects the central portion of the SMA wire 6 towards the central section of the edge 7. The greater the deflection, the greater the length of SMA wire 6 that is held at the edge 7 of the suction device 1.

As indicated by the doubled ended arrow in Figure 5, the pin 21 may be moveable towards and away from the central section of the edge 7 of the suction device 1. For example, as shown in Figure 5, the suction device 1 may comprise a pin slider 22. The pin slider 22 is in a fixed positional relationship with the pin 21. Accordingly, when the pin slider 22 moves, the pin 21 moves together with the pin slider 22. The pin slider 22 may be formed integrally with the pin 21. The position of the pin 21 defines the length of the SMA wire 6.

The pin slider 22 may be positioned above the void 4. For example, the pin slider 22 may be disposed directly above the frame that defines the void 4. The pin slider 22 may be connected to the frame that defines the void 4 in such a way that it is free to move one-dimensionally such that the pin 21 moves towards and away from the central section of the edge 7.

The moving pin 21 is a mechanism for adjusting wire length whilst using a vacuum to retain the SMA wire 6. The moving pin 21 is configured to deflect the SMA wire 6 at its central position. This mechanism is expected to be less likely to damage the SMA wire 6 and any coating than mechanical grippers during the wire handling, cutting and the crimp forming process.

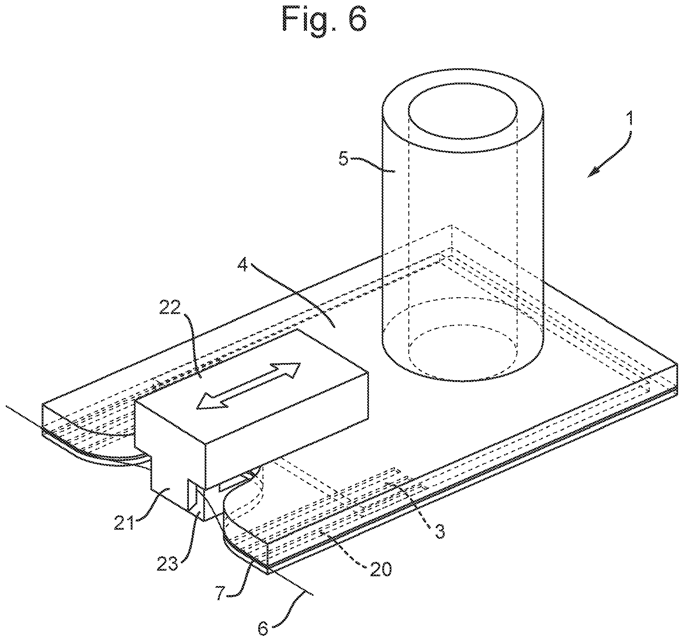

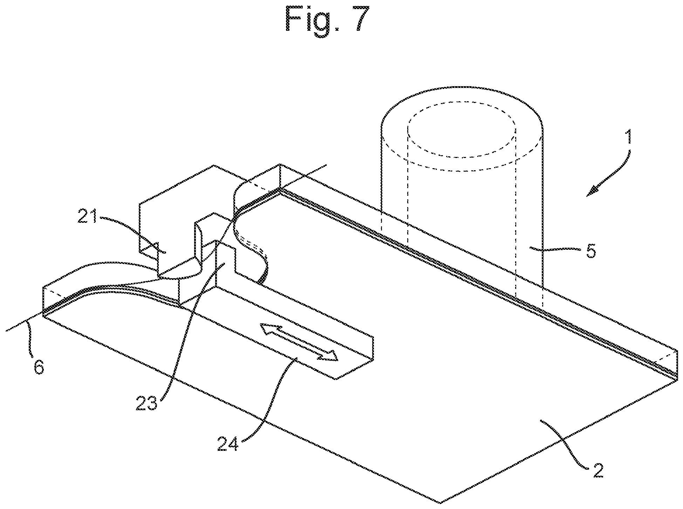

Figures 6 and 7 schematically depict views of the suction device 1 in a third configuration. The third configuration has all of the same features as the second configuration, as well as the following additional feature.

As shown in Figure 6, the suction device 1 may comprise a pin gripper 23. The pin gripper 23 is configured to grip a piece of SMA wire 6 against the pin 21. As indicated by the double ended arrow in Figure 7, the pin gripper 23 may be movable towards and away from the central section of the edge 7 of the suction device 1.

For example, as shown in Figure 7, the suction device 1 may comprise a gripper slider 24. The gripper slider 24 may be disposed at the underside of the base 2 the suction device 1. However, this is not necessarily the case. For example, it may be that the gripper slider 24 is positioned on top of the void 4 while the pin slider 22 is positioned below the base 2. In other words, the positions of the gripper slider 24 and the pin slider 22 shown in Figures 6 and 7 may be reversed. Similarly, the position of the pin slider 22 shown in Figure 5 may be changed such that the pin slider 22 is positioned below the base 2 of the suction device 1.

The gripper slider 24 is connected to the pin gripper 23 such then when the gripper slider 24 moves, the pin gripper 23 moves together with the gripper slider 24. The gripper slider 24 may be formed integrally with the pin gripper 23. The gripper slider 24 is connected to the base 2 such that the pin gripper 23 can move one-dimensionally towards and away from the central section of the edge 7 of the edge 7 of the suction device 1.

The pin gripper 23 may be biased to provide an urging force towards the pin 21. For example, the pin gripper 23 and/or the gripper slider 24 may be spring loaded. The piece of SMA wire 6 is captured against the pin 21 by the pin gripper 23.

The pin gripper 23 is a mechanism for adjusting wire length whilst using a vacuum to retain the SMA wire 6. The moving pin gripper 23 is configured to hold and deflect the SMA wire 6 at its central position. This mechanism is expected to be less likely to damage the SMA wire 6 and any coating than mechanical grippers during the wire handling, cutting and the crimp forming process.

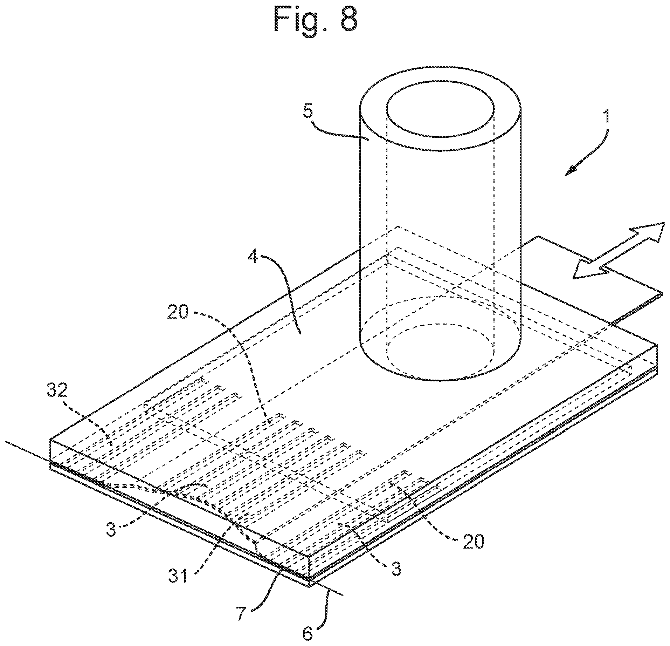

Figure 8 schematically depicts a view of the suction device 1 in a fourth configuration. As depicted in Figure 8, the central section of the edge 7 of the suction device 1 is moveable relative to the peripheral sections of the edge 7 in a longitudinal direction of the channels 20. Hence, the positions at which the SMA wire 6 is held at the edge 7 of the central section of the edge 7 can be varied. The position of the central section of the edge 7 defines the length of the SMA wire 6 that is held by the suction device 1.

In the configuration shown in Figure 8, the channels 20 are defined by a comb 3. The comb 3 is split into peripheral sections 32 and a central section 31. The central section 31 can move (e.g. slide) relative to the peripheral sections 32. This is indicated by the double ended arrow in Figure 8.

The movable central section of the edge 7 is a mechanism for adjusting wire length whilst using a vacuum to retain the SMA wire 6. The moving central section 31 of the comb 3 deflects the SMA wire 6 at its central position. This mechanism is expected to be less likely to damage the SMA wire 6 and any coating than mechanical grippers during the wire handling, cutting and the crimp forming process.

The SMA wire 6 may have a diameter of at most 50 microns, and optionally at most 25 microns. The cut piece of SMA wire 6 may have a length that is selected based on the size of the actuator assembly 13 (e.g. based on the camera size). The actuator assembly 13 may be for a camera that comprises a lens of less than 10 mm diameter. Optionally, the cut length of SMA wire 6 is at most 10 mm.

Openings are formed in the edge 7 where the channels 20 coincide with the edge 7. The openings may have a width of at most 500 microns, optionally at most 300 microns, optionally at most 200 microns, optionally at most 100 microns, optionally at most 50 microns, and optionally at most 25 microns. The openings may have a width of at least 25 microns, optionally at least 50 microns, optionally at least 100 microns, optionally at least 200 microns, and optionally at least 300 microns. For example, the width of the openings may be about 300 microns. The openings may have a height of at most 100 microns, optionally at most 50 microns and optionally at most 25 microns. The openings may have a height of at least 25 microns and optionally at least 50 microns. The height of the openings may be selected such that the height of the openings is greater than the diameter of the SMA wire 6. This arrangement makes it easier to position the piece of SMA wire 6. For example, the opening may have a height of 50 microns.

The openings may have a rectangular shape. However, this is not necessarily the case. Other shapes of opening may be implemented. For example, the openings may have a circular shape or an oval shape.

## Claims

1. A suction device (1) configured to hold a piece of shape memory alloy, SMA, wire (6) along an edge (7) of the device by gas pressure generated by suction, the suction device (1) being **characterized in that** it further comprises a plurality of channels (20) extending from the edge of the device towards a suction outlet of the suction device, the suction outlet connectable to a source of underpressure, wherein the plurality of channels coincide with the edge of the device at points that form a straight line when viewed in a longitudinal direction of the channels.

2. The suction device of claim 1, comprising a void (4) in fluid communication with the channels and the suction outlet, wherein the suction outlet does not overlap with the channels when viewed in a direction perpendicular to a plane comprising the channels.

3. The suction device of claim 1 or 2,
comprising a base (2) and a comb (3) that together define the channels, wherein said edge of the device is an edge of the comb; and/or
wherein the edge of the device is profiled such that the plurality of channels coincide with the edge of the device at points that form a curved line when viewed in a direction perpendicular to the channels.

4. The suction device of any of claims 1 to 3 wherein said edge of the device comprises peripheral sections (32) at which the channels coincide with the edge of the device and a central section (31) at which the edge of the device is set back relative to the peripheral sections,
wherein optionally none of the channels coincides with the edge of the device in the central section, such that in use when a piece of SMA wire is held along the edge of the device by gas pressure, a central portion of the piece of SMA wire does not contact the central section of the edge of the device.

5. The suction device of claim 4 comprising a pin (21) configured to deflect a central portion of a piece of SMA wire towards the edge of the device,
wherein optionally the pin is moveable towards and away from the central section of the edge of the device.

6. The suction device of claim 5 comprising a gripper (23) configured to grip a piece of SMA wire against the pin,
wherein optionally the gripper is moveable towards and away from the central section of the edge of the device and the gripper is biased to provide an urging force towards the pin.

7. The suction device of any of claims 1 to 4 wherein the central section of the edge of the device is moveable relative to the peripheral sections in a longitudinal direction of the channels.

8. A shape memory alloy, SMA, actuator assembly process using the suction device (1) of any previous claim to present a length of SMA wire (6) to pre-formed crimps (14, 15) on an actuator assembly (13) prior to closing the crimps over the wire.

9. A shape memory alloy, SMA, actuator assembly process comprising:
holding a length of SMA wire (6) along an edge (7) of a suction device (1) by gas pressure generated by suction, the suction device comprising a plurality of channels (20) extending from the edge of the device towards a suction outlet of the suction device, the suction outlet connectable to a source of underpressure, wherein the plurality of channels coincide with the edge of the device at points that form a straight line when viewed in a longitudinal direction of the channels.

10. The process of claim 9 comprising:
presenting the length of SMA wire to at least one pre-formed crimp (14, 15) on an actuator assembly (13); and
closing the at least one crimp over the wire.

11. The process of any of claims 8 to 10 comprising:
closing a first gripper (8) to grip an end of the length of SMA wire; and
pulling the length of SMA wire across the edge of the suction device,
the process of optionally comprising:
closing a second gripper (9) to grip the other end of the length of SMA wire; and
cutting the gripped length of SMA wire from a longer length of wire.

12. The process of any of claims 8 to 11 comprising:
pressing the length of SMA wire to the edge of the suction device with a mechanical deflector (12); and/or
stopping suction to release the length of SMA wire once at least one crimp has been closed over the length of SMA wire.

13. The process of any of claims 8 to 12 wherein the length of SMA wire has a diameter of at most 50 microns, wherein optionally the length of SMA wire has a diameter of at most 25 microns.

14. A method of manufacturing a miniature camera, the method comprising the process of any of claims 8 to 13.

## Patentansprüche

1. Saugvorrichtung (1), die dafür konfiguriert ist, ein Stück Draht (6) aus einer Formgedächtnislegierung (Shape Memory Alloy, SMA) entlang einem Rand (7) der Vorrichtung durch einen Gasdruck zu halten, der durch Saugen erzeugt wird, wobei die Saugvorrichtung (1) **dadurch gekennzeichnet ist, dass** sie ferner eine Vielzahl von Kanälen (20) umfasst, die sich von dem Rand der Vorrichtung zu einem Saugauslass der Saugvorrichtung erstrecken, wobei der Saugauslass mit einer Unterdruckquelle verbunden werden kann, wobei die Vielzahl von Kanälen mit dem Rand der Vorrichtung an Punkten zusammenfällt, die eine gerade Linie bilden, wenn sie in einer Längsrichtung der Kanäle betrachtet werden.

2. Saugvorrichtung nach Anspruch 1, die einen Hohlraum (4) in Fluidverbindung mit den Kanälen und dem Saugauslass umfasst, wobei der Saugauslass die Kanäle nicht überlappt, wenn man ihn in einer Richtung senkrecht zu einer Ebene betrachtet, die die Kanäle umfasst.

3. Saugvorrichtung nach Anspruch 1 oder 2,
die eine Basis (2) und einen Kamm (3) umfasst, die zusammen die Kanäle definieren, wobei der Rand der Vorrichtung ein Rand des Kamms ist; und/oder
wobei der Rand der Vorrichtung so profiliert ist, dass die Vielzahl von Kanälen mit dem Rand der Vorrichtung an Punkten zusammenfällt, die eine gekrümmte Linie bilden, wenn sie in einer Richtung senkrecht zu den Kanälen betrachtet werden.

4. Saugvorrichtung nach einem der Ansprüche 1 bis 3, wobei der Rand der Vorrichtung periphere Abschnitte (32), an denen die Kanäle mit dem Rand der Vorrichtung zusammenfallen, und einen zentralen Abschnitt (31), an dem der Rand der Vorrichtung relativ zu den peripheren Abschnitten zurückgesetzt ist, umfasst,
wobei optional keiner der Kanäle mit dem Rand der Vorrichtung im mittleren Abschnitt zusammenfällt, so dass bei Gebrauch, wenn ein Stück SMA-Draht entlang des Randes der Vorrichtung durch Gasdruck gehalten wird, ein zentraler Teil des Stücks SMA-Draht den zentralen Abschnitt des Randes der Vorrichtung nicht berührt.

5. Saugvorrichtung nach Anspruch 4, die einen Stift (21) umfasst, der dafür konfiguriert ist, einen mittleren Abschnitt eines Stücks SMA-Draht in Richtung des Randes der Vorrichtung abzulenken,
wobei der Stift optional zum mittleren Abschnitt des Randes der Vorrichtung hin und von diesem weg bewegbar ist.

6. Saugvorrichtung nach Anspruch 5, die einen Greifer (23) umfasst, der dafür konfiguriert ist, ein Stück SMA-Draht gegen den Stift zu greifen,
wobei der Greifer optional zu dem mittleren Abschnitt des Randes der Vorrichtung hin und von diesem weg bewegbar ist und der Greifer vorgespannt ist, um eine Druckkraft in Richtung des Stifts zu erzeugen.

7. Saugvorrichtung nach einem der Ansprüche 1 bis 4, wobei der zentrale Abschnitt des Randes der Vorrichtung relativ zu den peripheren Abschnitten in einer Längsrichtung der Kanäle bewegbar ist.

8. Verfahren zum Zusammenbau eines Aktuators aus einer Formgedächtnislegierung (SMA) unter Verwendung der Saugvorrichtung (1) nach einem der vorhergehenden Ansprüche, um einen SMA-Drahtabschnitt (6) an vorgeformte Crimps (14, 15) an einer Aktuatoranordnung (13) anzulegen, bevor die Crimps über dem Draht geschlossen werden.

9. Verfahren zum Zusammenbau eines Aktuators aus einer Formgedächtnislegierung (SMA), das Folgendes umfasst:
Halten eines SMA-Drahtabschnitts (6) entlang eines Randes (7) einer Saugvorrichtung (1) durch einen durch Saugen erzeugten Gasdruck, wobei die Saugvorrichtung eine Vielzahl von Kanälen (20) umfasst, die sich von dem Rand der Vorrichtung zu einem Saugauslass der Saugvorrichtung erstrecken, wobei der Saugauslass mit einer Unterdruckquelle verbunden werden kann, wobei die Vielzahl von Kanälen mit dem Rand der Vorrichtung an Punkten zusammenfällt, die eine gerade Linie bilden, wenn sie in einer Längsrichtung der Kanäle betrachtet werden.

10. Verfahren nach Anspruch 9, das Folgendes umfasst:
Anlegen des SMA-Drahtabschnitts an mindestens einen vorgeformten Crimp (14, 15) an einer Aktuatoranordnung (13); und
Schließen des mindestens einen Crimps über dem Draht.

11. Verfahren nach einem der Ansprüche 8 bis 10, das Folgendes umfasst:
Schließen eines ersten Greifers (8), um ein Ende des SMA-Drahtabschnitts zu greifen; und
Ziehen des SMA-Drahtabschnitts über den Rand der Saugvorrichtung,
wobei das Verfahren optional Folgendes umfasst:
Schließen eines zweiten Greifers (9), um das andere Ende des SMA-Drahtabschnitts zu greifen; und
Abschneiden des ergriffenen SMA-Drahtabschnitts von einem längeren Drahtabschnitt.

12. Verfahren nach einem der Ansprüche 8 bis 11, das Folgendes umfasst:
Anpressen des SMA-Drahtabschnitts an den Rand der Saugvorrichtung mit einem mechanischen Ablenker (12); und/oder
Anhalten des Saugvorgangs, um den SMA-Drahtabschnitt freizugeben, sobald mindestens ein Crimp über dem SMA-Drahtabschnitt geschlossen wurde.

13. Verfahren nach einem der Ansprüche 8 bis 12, wobei der SMA-Drahtabschnitt einen Durchmesser von höchstens 50 Mikrometern aufweist, wobei der SMA-Drahtabschnitt optional einen Durchmesser von höchstens 25 Mikrometern aufweist.

14. Verfahren zur Herstellung einer Miniaturkamera, wobei das Verfahren das Verfahren nach einem der Ansprüche 8 bis 13 umfasst.

## Revendications

1. Dispositif d'aspiration (1) configuré pour retenir une pièce de fil en alliage à mémoire de forme, SMA, (6) le long d'un bord (7) du dispositif par pression gazeuse générée par aspiration, le dispositif d'aspiration (1) étant **caractérisé en ce qu'**il comprend en outre une pluralité de canaux (20) s'étendant depuis le bord du dispositif vers une sortie d'aspiration du dispositif d'aspiration, la sortie d'aspiration étant raccordable à une source de sous-pression, dans lequel la pluralité de canaux coïncident avec le bord du dispositif à des points qui forment une ligne droite en vue dans une direction longitudinale des canaux.

2. Dispositif d'aspiration selon la revendication 1, comprenant un vide (4) en communication fluidique avec les canaux et la sortie d'aspiration, dans lequel la sortie d'aspiration ne chevauche pas les canaux en vue dans une direction perpendiculaire à un plan comprenant les canaux.

3. Dispositif d'aspiration selon la revendication 1 ou 2,
comprenant une base (2) et un peigne (3) qui définissent ensemble les canaux, dans lequel ledit bord du dispositif est un bord du peigne ; et/ou
dans lequel le bord du dispositif est profilé de telle sorte que la pluralité de canaux coïncident avec le bord du dispositif à des points qui forment une ligne courbée en vue dans une direction perpendiculaire aux canaux.

4. Dispositif d'aspiration selon l'une quelconque des revendications 1 à 3, dans lequel ledit bord du dispositif comprend des sections périphériques (32) auxquelles les canaux coïncident avec le bord du dispositif et une section centrale (31) à laquelle le bord du dispositif est en retrait relativement aux sections périphériques,
dans lequel, optionnellement, aucun des canaux ne coïncide avec le bord du dispositif dans la section centrale, de telle sorte que, durant l'utilisation, lorsqu'une pièce de fil en SMA est retenue le long du bord du dispositif par pression gazeuse, une partie centrale de la pièce de fil en SMA n'entre pas en contact avec la section centrale du bord du dispositif.

5. Dispositif d'aspiration selon la revendication 4, comprenant une goupille (21) configurée pour défléchir une partie centrale d'une pièce de fil en SMA vers le bord du dispositif,
dans lequel, optionnellement, la goupille est mobile vers, et à l'opposé de, la section centrale du bord du dispositif.

6. Dispositif d'aspiration selon la revendication 5, comprenant un élément de serrage (23) configuré pour serrer une pièce de fil en SMA contre la goupille,
dans lequel optionnellement l'élément de serrage est mobile vers, et à l'opposé de, la section centrale du bord du dispositif et l'élément de serrage est sollicité pour fournir une force de poussée vers la goupille.

7. Dispositif d'aspiration selon l'une quelconque des revendications 1 à 4, dans lequel la section centrale du bord du dispositif est mobile relativement aux sections périphériques dans une direction longitudinale des canaux.

8. Processus d'ensemble actionneur pour alliage à mémoire de forme, utilisant le dispositif d'aspiration (1) d'une quelconque revendication précédente pour présenter une longueur de fil en SMA (6) à des éléments de sertissage préformés (14, 15) sur un ensemble actionneur (13) avant de fermer les éléments de sertissage sur le fil.

9. Processus d'ensemble actionneur pour alliage à mémoire de forme, comprenant :
la retenue d'une longueur de fil en SMA (6) le long d'un bord (7) d'un dispositif d'aspiration (1) par pression gazeuse générée par aspiration, le dispositif d'aspiration comprenant une pluralité de canaux (20) s'étendant depuis le bord du dispositif vers une sortie d'aspiration du dispositif d'aspiration, la sortie d'aspiration étant raccordable à une source de sous-pression, dans lequel la pluralité de canaux coïncident avec le bord du dispositif à des points qui forment une ligne droite en vue dans une direction longitudinale des canaux.

10. Processus selon la revendication 9, comprenant :
la présentation de la longueur de fil en SMA à au moins un élément de sertissage préformé (14, 15) sur un ensemble actionneur (13) ; et
la fermeture de l'au moins un élément de sertissage sur le fil.

11. Processus selon l'une quelconque des revendications 8 à 10, comprenant :
la fermeture d'un premier élément de serrage (8) pour serrer une extrémité de la longueur de fil en SMA ; et
le tirage de la longueur de fil en SMA à travers le bord du dispositif d'aspiration,
le processus de comprenant optionnellement :
la fermeture d'un second élément de serrage (9) pour serrer l'autre extrémité de la longueur de fil en SMA ; et
la découpe de la longueur serrée de fil en SMA à partir d'une longueur plus longue de fil.

12. Processus selon l'une quelconque des revendications 8 à 11, comprenant :
la pression de la longueur de fil en SMA sur le bord du dispositif d'aspiration avec un déflecteur mécanique (12) ; et/ou
l'arrêt de l'aspiration pour libérer la longueur de fil en SMA une fois qu'au moins un élément de sertissage a été fermé sur la longueur de fil en SMA.

13. Processus selon l'une quelconque des revendications 8 à 12 dans lequel la longueur de fil en SMA a un diamètre d'au plus 50 microns, dans lequel, optionnellement, la longueur de fil en SMA a un diamètre d'au plus 25 microns.

14. Procédé de fabrication d'une caméra miniature, le procédé comprenant le processus de l'une quelconque des revendications 8 à 13.
